(19) Europäisches Patentamt
European Patent Office
Office européen des brevets

(11) EP 4 786 773 A1

(12) EUROPÄISCHE PATENTANMELDUNG

(43) Veröffentlichungstag:
05.08.2026 Patentblatt 2026/32

(21) Anmeldenummer: 25154972.1

(22) Anmeldetag: 30.01.2025

(51) Internationale Patentklassifikation (IPC):
F02D 41/14 (2006.01)     F02D 29/06 (2006.01)

(52) Gemeinsame Patentklassifikation (CPC):
F02D 29/06; B60H 1/3232; F02D 41/1497;
F02D 2200/1006; F02D 2250/24

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Schmitz Cargobull AG
48341 Altenberge (DE)

(72) Erfinder:
• Flacke, Norbert
45894 Gelsenkirchen (DE)
• Tenbrock, Rolf
48683 Ahaus (DE)
• Schanzmann, Martin
46395 Bocholt (DE)

(74) Vertreter: Cohausz & Florack
Patent- & Rechtsanwälte
Partnerschaftsgesellschaft mbB
Bleichstraße 14
40211 Düsseldorf (DE)

(54) **MOTORPRÜFUNG**

(57) Es werden Verfahren und Vorrichtungen zur Motorüberwachung offenbart. Das Verfahren zur Überwachung des Motors (100), weist es ein Bestimmen einer Soll-Motorleistungsindikation des Motors (100) auf, wobei die Soll-Motorleistungsindikation auf einer Kraftstoffzufuhrmenge (K) basiert und wobei der Motor (100) einen Generator (110) antreibt. Weiter weist es ein Bestimmen einer Ist-Motorleistungsindikation des Motors (100) basierend auf einer Generatorausgabe des Generators (110) und ein Bestimmen eines Motorbetriebszustands des Motors (110) basierend auf einem Vergleich zwischen der Ist-Motorleistungsindikation und der Soll-Motorleistungsindikation auf.

Fig.1

EP 4 786 773 A1

## Beschreibung

### Gebiet

Die Erfindung betrifft Motoren, insbesondere Verbrennungsmotoren, insbesondere Motoren von Transportkältemaschinen, insbesondere von Transportkältemaschinen zum Temperieren, insbesondere Kühlen und/oder Heizen, eines Laderaums eines Straßennutzfahrzeugs. Insbesondere betrifft die Erfindung eine Überprüfung einer Motorfunktion eines solchen Motors.

### Hintergrund

Motoren, insbesondere Verbrennungsmotoren, wandeln eine Zufuhr von Energie pro Zeit, Eingangsleistung, (z.B. zugeführt als Kraftstoff oder Strom) in eine mechanische Ausgabe von mechanischer Energie pro Zeit, Ausgangsleistung, um. Dieser Umwandlungsprozess unterliegt Verlusten und kann insbesondere unterschiedliche Wirkungsgrade aufweisen. Insbesondere kann ein Wirkungsgrad eines Motors im Laufe der Zeit (beispielsweise während eines Wartungsintervalls zwischen Inspektionen) degradieren. Dies kann zum Beispiel durch unvorteilhafte Einstellungen, Verschmutzungen, Verschleiß, mangelnde Abdichtung, Beeinträchtigungen der Schmierung, und/oder Kombinationen hieraus verursacht werden. Somit kann beispielsweise für eine gegebene Energiezufuhr (z.B. Kraftstoffmenge oder Stromstärke) eine geringere tatsächliche Ausgangsleistung erzielt werden, als der Motor unter idealen Bedingungen (z.B. nominell und/oder erwartungsgemäß) erzielen würde. Da üblicherweise im Betrieb des Motors eine Messung einer tatsächlichen Leistung nicht oder nur mit hohem technischen Aufwand verfügbar ist, kann gegenwärtig der Wirkungsgrad des Motors nicht oder nur schwer festgestellt werden. Es ergibt sich damit unter anderem ein Risiko, dass erhöhte Verlustleistungen zu einer Überhitzung des Motors führen und/oder, dass bei einer ineffizienten Nutzung einer Kraftstoffzufuhr unverbrannter Kraftstoff den Brennraum verlässt und in anderen Bereichen der Kraftstoffstrecke (z.B. im Abgaspfad, z.B. im Bereich eines Auspuffs, insbesondere im Bereich von Messsonden und/oder Katalysatoren) verbrennt und dort Überhitzungen oder gar Brände auslöst.

### Zusammenfassung einiger beispielhafter Ausführungsformen der Erfindung

Der Motor gemäß der Erfindung kann insbesondere ein Motor einer Transportkältemaschine sein. Häufig werden elektrische Verbraucher wie beispielsweise zumindest ein elektrischer Motor (z.B. eines Lüfters und/oder Kompressors), zumindest ein Heizelement, zumindest ein (z.B. Wechselstrom zu Gleichstrom) Wandler und/oder Kombinationen hieraus einer solchen Transportkältemaschine von einem Generator gespeist, welcher seinerseits von einem (z.B. in einem optimalen Betriebspunkt laufenden) Verbrennungsmotor angetrieben wird.

Es wurde erkannt, dass es vorteilhaft ist, einen Betriebszustand des Verbrennungsmotors (z.B. einer Transportkältemaschine) bestimmen zu können, insbesondere im laufenden Betrieb des Verbrennungsmotors und/oder der Transportkältemaschine.

Eine Aufgabe der vorliegenden Erfindung ist es daher, mit möglichst geringem Aufwand einen Betriebszustands eines (Verbrennungs-)Motors zu bestimmen, insbesondere eines (Verbrennungs-)Motors einer Transportkältemaschine, welche insbesondere Teil eines Straßennutzfahrzeugs ist.

Gemäß einem ersten Aspekt wird ein Verfahren zur Überwachung eines (Verbrennungs-)Motors (z.B. umfassend einen Diesel-Oxidationskatalysator) (z.B. eines Motors einer Transportkältemaschine) vorgeschlagen, umfassend

- Bestimmen (z.B. Berechnen, Messen und/oder Empfangen) einer (z.B. aktuellen; z.B. zeitlich gemittelt über eine vorbestimmte Zeit) Soll-Motorleistungsindikation (indikativ für eine Soll-Motorleistung) des Motors, wobei die Soll-Motorleistungsindikation auf einer (z.B. aktuellen; z.B. zeitlich gemittelt über eine vorbestimmte Zeit) Kraftstoffzufuhrmenge basiert (z.B. Einspritzung in den Motor)(z.B. bestimmt durch Motorsteuergerät und/oder empfangen von Motorsteuergerät und/oder bestimmt basierend auf (z.B. anderweitigem) Kraftstoffflusssensor), wobei der Motor (z.B. ausschließlich und/oder als einzigen Abnehmer der Motorleistung) einen Generator antreibt,
- Bestimmen (z.B. Berechnen, Messen und/oder Empfangen) einer Ist-Motorleistungsindikation des Motors (indikativ für eine Ist-Motorleistung)(z.B. Ist-Motorleistung und/oder Ist-Generatorausgangsstrom-, Spannung- und/oder Leistung und/oder Ist-Drehzahl) basierend auf einer (z.B. elektrischen) Generatorausgabe des Generators (z.B. Generatorausgangsleistung, z.B. basierend auf einer (z.B. gemessenen) Ausgangsspannung, einem (z.B. gemessenen) Ausgangsstrom, und/oder einem (z.B. vorbekannten, z.B. drehzahlabhängigen) Generatorwirkungsgrad), und
- Bestimmen eines (z.B. aktuellen) Motorbetriebszustands (z.B. Kraftstoffverbrennungsrate, Wirkungsgrad, Betriebszustandsanomalie) des Motors basierend auf einem Vergleich zwischen der Ist-Motorleistungsindikation und der Soll-Motorleistungsindikation.

Das Verfahren dient einer Überwachung eines Motors, insbesondere eines Verbrennungsmotors. Der Motor kann insbesondere ein Dieselmotor sein und ferner insbesondere einen Diesel-Oxidationskatalysator umfassen. Insbesondere wurde erkannt, dass Diesel-Oxidationskatalysatoren in einem Abgaspfad des Motors angeordnet sein können, wo sie bei suboptimaler Verbrennung von Kraftstoff durch den Motor unverbrannten Kraftstoff entzünden können und dabei überhitzen können.

Insbesondere kann der (Verbrennungs-)Motor ein Motor einer Transportkältemaschine sein. Die Transportkältemaschine kann beispielsweise Teil eines Fahrzeuges sein. Das Fahrzeug kann vorliegend insbesondere ein Straßenfahrzeug, insbesondere ein Straßennutzfahrzeug, z.B. ein bereiftes Straßennutzfahrzeug sein. Beispielsweise kann das Fahrzeug zumindest 1, 2, 3, 4, 6, 8, 10, 12 oder mehr Räder mit jeweiligem Reifen aufweisen.

Das offenbarte Fahrzeug kann beispielsweise ein Fahrzeug für den privaten Straßenverkehr, insbesondere ein motorisiertes Zwei- oder Dreirad (Motorrad, Moped, Roller) oder ein Personenkraftwagen (PKW) sein. Das offenbarte Fahrzeug kann insbesondere ein Nutzfahrzeug sein, zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Alternativ oder zusätzlich kann der Anhänger auch eine Außenwand aufweisen, welche zumindest teilweise eine Plane umfasst (Planenaufbauten).

Die Transportkältemaschine kann beispielsweise Luft abkühlen (z.B. einem Luftstrom Wärme entziehen), die in den Laderaum des Fahrzeugs (z.B. bereiftes Straßennutzfahrzeug) geblasen wird. Zu diesem Zweck kann die Transportkältemaschine einen Kältekreislauf mit einem (beispielsweise mittels eines elektrischen Motors angetriebenen) Verdichter zum Verdichten eines Kältemittels, einen Kondensator, eine Drosseleinrichtung und einen Verdampfer umfassen. In dem Kältekreislauf strömt das von dem Verdichter verdichtete Kältemittel über den Kondensator und eine in Strömungsrichtung hinter dem Kondensator angeordnete Drosseleinrichtung, die beispielsweise als ein steuerbares Ventil (z.B. Stellventil) ausgebildet sein kann, zu dem Verdampfer. In dem Wärmetauscher wird das zuvor verflüssigte Kältemittel verdampft und entzieht dabei einem getrennt von dem Kältemittel durch den Wärmetauscher geleiteten Luftstrom Wärme, so dass die Luft des Luftstroms gekühlt wird. Die gekühlte Luft dieses Luftstroms wird anschließend in den Laderaum des Straßennutzfahrzeugs geblasen, um diesen zu kühlen.

Häufig wird zumindest ein oder mehrere elektrische Motoren (z.B. ein elektrischer Motor des Verdichters) einer solchen Transportkältemaschine (z.B. und (z.B. alle) weitere(n) Komponenten der Transportkältemaschine) von einem Generator, der seinerseits von einem (z.B. in einem optimalen Betriebspunkt laufenden) Verbrennungsmotor (z.B. dem vorliegenden Motor) angetrieben wird, mit elektrischer Energie versorgt. Ein Generator kann hohe Momentanleistungen bereitstellen, wie sie für den Betrieb einer Transportkältemaschine notwendig sind.

Die Transportkältemaschine dient damit einer Temperierung (z.B. Kühlung oder Aufwärmung) eines Laderaums des Fahrzeugs. Somit kann sichergestellt werden, dass die Temperatur insbesondere von temperaturempfindlichen Gütern einen (z.B. von den Gütern abhängigen) Temperaturgrenzwert während eines Kühltransports nicht übersteigt. Um diese Aufgabe effizient zu erfüllen, ist es unter anderem erstrebenswert, dass der Motor eine effizient mechanische Leistung bereitstellt.

Das Verfahren umfasst ein Bestimmen einer Soll-Motorleistungsindikation des Motors. Das Bestimmen kann insbesondere ein Berechnen umfassen, beispielsweise basierend auf einer Kraftstoffzufuhr zum (z.B. Brennraum des) Motor(s), beispielsweise basierend auf einer vorbestimmten (z.B. gespeicherten und/oder analytisch bestimmten und/oder angelernten) Beziehung zwischen Kraftstoffzufuhr und Ausgangsleistung des Motors, z.B. unter Berücksichtigung weiterer Faktoren wie einer Motortemperatur, einer Drehzahl, einer Luftzufuhr und/oder Kombinationen hieraus. Auch kann ein Berechnen der Soll-Motorleistungsindikation auf einem Modell des Motors beruhen. Das Bestimmen kann z.B. ein Messen umfassen. Beispielsweise kann eine aktuelle Kraftstoffzufuhr gemessen werden. Auch kann das Bestimmen z.B. ein Empfangen umfassen. Beispielsweise kann ein Motorsteuergerät eine Soll-Motorleistungsindikation bestimmen und die Soll-Motorleistungsindikation von dem Motorsteuergerät empfangen werden.

Die Soll-Motorleistungsindikation entspricht insbesondere einer aktuellen und/oder momentanen Soll-Motorleistungsindikation. Beispielsweise kann die Soll-Motorleistungsindikation zeitlich gemittelt sein, z.B. über eine vorbestimmte Zeit, z.B. über zumindest oder höchstens 1s, 2s, 5s, 10s, 20s, 1min, 2min, 5min, 10min, 20min, oder 1h.

Die Soll-Motorleistungsindikation ist indikativ für eine Soll-Motorleistung des Motors bei gegebener Energiezufuhr (insbesondere Kraftstoffzufuhr). Das Präfix "Soll-" gibt hierbei an, dass die Soll-Motorleistungsindikation eine angenommene, vermutete und/oder gewünschte Motorleistungsindikation betrifft, insbesondere basierend auf einer bekannten Energiezufuhr. Die Soll-Motorleistungsindikation kann insbesondere von einer tatsächlichen Ist-Motorleistungsindikation abweichen. Beispielsweise kann die Soll-Motorleistungsindikation (z.B. unter anderem) eine Soll-Ausgangsleistung des Motors und/oder ein Soll-Drehmoment des Motors angeben.

Die Soll-Motorleistungsindikation kann für eine bestimmte oder mehrere Drehzahlen und/oder Drehzahlbereiche des Motors bestimmt werden.

Die Soll-Motorleistungsindikation basiert auf einer Kraftstoffzufuhrmenge.

Die Kraftstoffzufuhrmenge gibt an, wie viel Kraftstoff pro Zeiteinheit an den Motor geliefert wird und/oder von dem Motor bezogen wird. Die Kraftstoffzufuhr wird beispielsweise als Volumenstrom angegeben und/oder bestimmt (z.B. Kraftstoffvolumen pro Zeiteinheit), z.B. in einer Einheit wie Liter pro Minute und/oder Milliliter pro Sekunde. Alternativ oder zusätzlich wird die Kraftstoffzufuhr als Massestrom angegeben und/oder bestimmt (z.B. Kraftstoffmasse pro Zeiteinheit), z.B. in einer Einheit wie Gramm pro Sekunde oder pro Minute.

Die Kraftstoffzufuhrmenge betrifft beispielsweise eine aktuelle (z.B. momentane) Kraftstoffzufuhrmenge. Auch kann die Kraftstoffzufuhrmenge beispielsweise zeitlich gemittelt sein, beispielsweise über eine vorbestimmte Zeit. Beispielsweise können die Soll-Motorleistungsindikation und die Kraftstoffzufuhrmenge über eine gleichen vorbestimmte Zeitspanne (z.B. gleiche Länge und/oder gleicher Startzeitpunkt) gemittelt sein.

Die Kraftstoffzufuhrmenge kann z.B. einer Einspritzung von Kraftstoff in den Motor (z.B. einer Menge von in den Motor eingespritztem Kraftstoff) entsprechen. Beispielsweise kann die Kraftstoffzufuhrmenge durch ein Motorsteuergerät (z.B. des Motors) bestimmt sein, ausgehend von einem Motorsteuergerät empfangen werden und/oder bestimmt werden, z.B. basierend auf einem Kraftstoffflusssensor.

Der Motor treibt einen Generator an. Beispielsweise kann der Motor ausschließlich und/oder als einzigen Abnehmer der Motorleistung einen Generator antreiben oder zumindest im Wesentlichen ausschließlich und/oder als einzigen Abnehmer der Motorleistung einen Generator antreiben (beispielsweise können zumindest 85%, 90%, 95%, 97%, 98%, oder 99% einer Ausgangsleistung des Motors von dem Generator aufgenommen werden). Auch kann der Motor den Generator zu einem bekannten und/oder vorbestimmten Bruchteil seiner Motorausgangsleistung antreiben.

Der Generator ist insbesondere dazu eingerichtet, einen Teil einer Transportkältemaschine mit Energie zu versorgen. Insbesondere kann ein Kompressor, zumindest ein Lüfter und/oder weitere Komponenten der Transportkältemaschine von dem Generator mit elektrischer Energie versorgt werden.

Der Generator ist insbesondere ein Wechselstromgenerator und liefert insbesondere eine dreiphasige Ausgangswechselspannung. Insbesondere kann eine dreiphasige Ausgangswechselspannung mit einer Spannung in Höhe von 250V bis 690 V (z.B. wobei der obere Grenzwert zumindest temporär überschritten werden kann und/oder untere Grenzwert zumindest temporär unterschritten werden kann) (z.B. 400 V, z.B. gemittelt und/oder im Wesentlichen (z.B. +/-5%, 10%, 15%, 20%, 30%, 40%, 50%)) (Effektivwert der verketteten Spannungen) von dem Generator bereitgestellt werden.

Unter anderem wurde anmeldungsgemäß erkannt, dass mittels des Generators eine (z.B. tatsächliche) Ausgangsleistung des Motors bestimmt werden kann.

Das Verfahren umfasst ferner ein Bestimmen einer Ist-Motorleistungsindikation des Motors basierend auf einer (z.B. elektrischen) Generatorausgabe des Generators (z.B. Generatorausgangsleistung, z.B. basierend auf einer (z.B. gemessenen) Ausgangsspannung, einem (z.B. gemessenen) Ausgangsstrom, und/oder einem (z.B. vorbekannten, z.B. drehzahlabhängigen) Generatorwirkungsgrad).

Das Bestimmen der Ist-Motorleistungsindikation kann insbesondere ein Berechnen umfassen, beispielsweise basierend auf einer Ausgangsleistung des Generators. Das Bestimmen kann beispielsweise alternativ oder zusätzlich ein Messen der Ist-Motorleistungsindikation umfassen (z.B. mit einem Strom- und/oder einem Spannungssensor). Ferner kann alternativ oder zusätzlich die Ist-Motorleistungsindikation empfangen werden, z.B. von einem Steuergerät, z.B. einem Steuergerät für zumindest einen Teil der (z.B. Elektrik der) Transportkältemaschine.

Die Ist-Motorleistungsindikation ist beispielsweise indikativ für eine Ist-Motorleistung des Motors. Beispielsweise kann die Ist-Motorleistungsindikation es erlauben, die Ist-Motorleistung basierend auf der Ist-Motorleistungsindikation zu bestimmen, z.B. allein basierend auf der Ist-Motorleistungsindikation oder in Kombination mit weiteren Faktoren, z.B. einer Drehzahl des Motors, eines Wirkungsgrads des Generators, eines Anteils, zu dem Motorleistung in Generatorleistung umgesetzt wird und/oder Kombinationen hieraus.

Die Ist-Motorleistungsindikation kann beispielsweise eine Ist-Motorleistung, einen Ist-Generatorausgangsstrom, eine Ist-Generatorausgangsspannung und/oder eine Ist-Generatorausgangsleistung angeben und/oder umfassen.

Die Generatorausgabe kann beispielsweise eine elektrische Ausgabe betreffen. Beispielsweise kann die Generatorausgabe einen Ist-Generatorausgangsstrom, eine Ist-Generatorausgangsspannung und/oder eine Ist-Generatorausgangsleistung umfassen.

Es wurde erkannt, dass die Generatorausgabe mit der tatsächlichen Motorleistung korreliert, sogar (z.B. im Wesentlichen) zu der Motorleistung proportional sein kann. Beispielsweise kann eine Abschätzung für ein tatsächliches Ist-Drehmoment des Motors bestimmt werden, indem eine elektrische Ist-Ausgangsleistung des Generators durch eine (z.B. Ist-)Drehzahl des Motors geteilt wird. Beispielsweise kann ferner ein Wirkungsgrad des Generators bei der Bestimmung der Ist-Motorleistungsindikation berücksichtigt werden, beispielsweise indem die Generatorausgangsleistung ebenfalls durch den Wirkungsgrad des Generators geteilt wird. Beispielsweise kann auch eine Ist-Motorleistung basierend auf einer Ist-Ausgangsleistung des Generators bestimmt werden, beispielsweise indem die Ist-Ausgangsleistung des Generators als Ist-Motorleistung angenommen wird oder indem die Ist-Ausgangsleistung durch einen Wirkungsgrad des Generators geteilt wird.

Der Wirkungsgrad des Generators kann beispielsweise vorbekannt sein, beispielsweise vorbestimmt. Beispielsweise kann der Wirkungsgrad drehzahlabhängig oder drehzahlunabhängig Generatorwirkungsgrad sein.

Die Ist-Motorleistungsindikation entspricht (z.B. basiert auf) insbesondere einer aktuellen und/oder momentanen Generatorausgabe. Beispielsweise kann die Ist-Motorleistungsindikation zeitlich gemittelt sein, z.B. über eine vorbestimmte Zeit, z.B. über zumindest oder höchstens 1s, 2s, 5s, 10s, 20s, 1min, 2min, 5min, 10min, 20min, oder 1h. Beispielsweise können die Ist-Motorleistungsindikation und die Soll-Motorleistungsindikation (z.B. und die Kraftstoffzufuhrmenge) über eine gleiche vorbestimmte Zeitspanne (z.B. gleiche Länge und/oder gleicher Startzeitpunkt) gemittelt sein.

Die Ist-Motorleistungsindikation kann für eine bestimmte oder mehrere Drehzahlen und/oder Drehzahlbereiche des Motors bestimmt werden.

Das Verfahren umfasst ferner ein Bestimmen eines (z.B. aktuellen) Motorbetriebszustands des Motors.

Der Motorbetriebszustand kann beispielsweise eine Kraftstoffverbrennungsrate (z.B. als einen Anteil an Kraftstoff, welcher verbrannt wird, z.B. in Prozent; beispielsweise absolut oder in Relation zu einer Vergleichsgröße, z.B. einer erwarteten Kraftstoffverbrennungsrate) und/oder einen Wirkungsgrad (z.B. in Prozent). Auch kann der Motorbetriebszustand beispielsweise eine Betriebszustandsanomalie betreffen. Beispielsweise kann der Motorbetriebszustand angeben, ob ein Normalbetrieb (z.B. ein normaler, erwartungsgemäßer, und/oder ordnungsgemäßer Betrieb) oder aber ob ein Fehlerbetrieb (z.B. ein abnormaler, unerwarteter und/oder nicht ordnungsgemäßer Betrieb) des Motors vorliegt. Beispielsweise kann bestimmt werden, ob eine Kraftstoffverbrennungsrate oder einen Wirkungsgrad in einem normalen Bereich liegen oder alternativ in einem nichtnormalen Bereich liegen. Die Bereiche können beispielsweise vorbestimmt sein und/oder angelernt sein, z.B. aus historischen Daten.

Der Motorbetriebszustand kann beispielsweise basierend auf einem Vergleich zwischen der Ist-Motorleistungsindikation und der Soll-Motorleistungsindikation bestimmt werden. Beispielsweise kann eine Ist-Motorleistungsindikation eine Ist-Motorleistung angeben und eine Soll-Motorleistungsindikation eine Soll-Motorleistung angeben. Der Vergleich kann beispielsweise als eine Differenz oder ein Quotient zwischen Ist-Motorleistungsindikation und Soll -Motorleistungsindikation (beispielsweise wobei zumindest eine der Motorleistungsindikationen in einen hierfür geeigneten Vergleichswert umgerechnet wird) durchgeführt werden. Durch einen Vergleich der beiden Leistungen kann der Motorbetriebszustand bestimmt werden. Beispielsweise kann bestimmt werden, dass die Ist-Motorleistung geringer als eine Soll-Motorleistung (z.B. bei gegebener Kraftstoffzufuhr) ist, beispielsweise um einen (z.B. vorbestimmten) Schwellwert, z.B. um einen relativen Schwellwert (z.B. zumindest 5%, 10%, 20%, 30% oder mehr) der Ist-Motorleistung oder der Soll-Motorleistung. Beispielsweise kann bei einer einer Abweichung auf eine unvollständige Kraftstoffverbrennung, einen reduzierten Wirkungsgrad und/oder einen nicht-normalen Betriebszustand (z.B. Fehlerbetrieb) geschlossen werden.

Beispielsweise kann der Vergleich für eine Drehzahl oder einen Drehzahlbereich durchgeführt werden. Auch kann der Vergleich für mehrere voneinander verschiedene Drehzahlen, beispielsweise innerhalb eines (z.B. vorbestimmten Drehzahlbereichs) durchgeführt werden.

Beispielsweise kann der Vergleich für eine Mehrzahl von Paaren aus Ist-Motorleistungsindikationen und Soll-Motorleistungsindikationen durchgeführt werden, beispielsweise bei im Wesentlichen gleichen oder voneinander verschiedenen Parametern wie z.B. Drehzahl, Motortemperatur, Motorlaufzeit und/oder Kombinationen hieraus. Beispielsweise können mehrere solcher Paare in einer Zeitspanne von zumindest oder höchstens 30min, 20min 10min, 5min, 2min, 1min, 30s, 10s, 5s, 2s, oder 1s bestimmt und/oder ausgewertete werden, beispielsweise wobei zwischen Zeitspannen, in welchen Daten erhoben werden, Pausen ohne Datenerhebung bestehen, beispielsweise zumindest oder höchstens 1h, 5h, 10h, 12h, 1d, 2d, 1w.

Das Verfahren kann im laufenden Betrieb des Motors und/oder der Transportkältemaschine und/oder während das Fahrzeug umfassend die Transportkältemaschine fährt ausgeführt werden. Hierdurch wird unter anderem eine kontinuierliche Prüfung des Motors ermöglicht.

Beispielsweise kann das Verfahren für einen gegebenen Motor in regelmäßigen Intervallen, beispielsweise zumindest oder höchstens 1h, 5h, 10h, 12h, 1d, 2d, 1w durchgeführt werden. Beispielsweise können die Intervalle bei einer Abweichung zwischen Soll- und Ist-Motorleistungsindikation verringert werden auf z.B. höchstens oder zumindest 30min, 20min 10min, 5min, 2min, 1min, 30s, 10s, 5s, 2s, oder 1s.

Gemäß einem Ausführungsbeispiel des Verfahrens gemäß dem ersten beispielhaften Aspekt wird vorgeschlagen, dass die Soll-Motorleistungsindikation zumindest eines der Folgenden angibt

- ein Soll-Motordrehmoment des Motors (z.B. indiziertes Drehmoment) und/oder eine Soll-Motorleistung des Motors (z.B. entsprechend einer Generatoreingangsleistung) und/oder
- eine Soll-Generatorausgangsleistung des Generators, einen Soll-Generatorausgangsstrom des Generators, und/oder eine Soll-Generatorausgangsspannung des Generators.

Die Soll-Motorleistungsindikation lässt einen Rückschluss auf die erwartete Motorleistung (z.B. bei gegebener Kraftstoffzufuhr) zu. Hierfür kann die Soll-Motorleistungsindikation einen mit der Motorleistung zusammenhängenden Wert angeben. Die Soll-Motorleistungsindikation kann beispielsweise einen Kennwert des Motors, z.B. ein Drehmoment oder eine Motorleistung des Motors angeben. Auch kann die Soll-Motorleistungsindikation einen Wert der elektrischen Ausgabe des Generators (z.B. bei gegebener Kraftstoffzufuhr zum Motor) angeben, z.B. einen Ausgangsstrom, eine Ausgangsspannung und/oder eine Ausgangsleistung des Generators. Insbesondere unter Kenntnis einer Drehzahl des Motors (z.B. identisch mit einer Drehzahl des Generators) und/oder eines Wirkungsgrads des Generators können zumindest einige der obigen Größen (insbesondere Ausgangsleistung des Generators und Drehmoment und/oder Leistung des Motors) ineinander umgerechnet werden, in erster Näherung als $P_G = \eta \cdot P_M$, wobei $P_G$ die Generator-Ausgangsleistung angibt, $\eta$ den Wirkungsgrad des Generators (z.B. drehzahlabhängig oder drehzahlunabhängig) und $P_M$ die Motorausgangsleistung. Die Leistung $P_M$ kann über die Drehgeschwindigkeit und/oder Frequenz $\omega$ des Motors auf das Drehmoment M des Motors zurückgeführt werden als $P_M = M \cdot \omega$.

Beispielsweise kann von einem Steuergerät des Motors ein Soll-Drehmoment des Motors erfasst werden und hieraus unter Berücksichtigung der Drehzahl des Motors (z.B. bestimmt aus einer Frequenz der Generator-Ausgangsspannung und/oder des Generator-Ausgangsstroms) eine Soll-Motorleistung errechnet werden (z.B. durch Multiplikation des Drehmoments mit der Drehzahl). Diese Soll-Motorleistung kann beispielsweise als die Soll-Motorleistungsindikation herangezogen werden. Auch kann die Soll-Motorleistung beispielsweise mit einem Wirkungsgrad des Generators multipliziert werden um eine Soll-Ausgangsleistung des Generators als Soll-Motorleistungsindikation zu erhalten. Die Soll-Motorleistung kann mit einer Ist-Ausgangsleistung des Generators (z.B. erhalten als Produkt von Ausgangsspannung und Ausgangsstrom des Generators) verglichen werden (z.B. per Differenzbildung und/oder Quotientenbildung), um den Betriebszustand des Motors zu bestimmen. Auch kann alternativ beispielsweise eine Ist-Ausgangsleistung des Generators durch einen Wirkungsgrad des Generators geteilt werden und der erhaltene Quotient mit einer Soll-Ausgangsleistung des Motors verglichen werden.

Auch kann alternativ oder zusätzlich eine Soll-Drehzahl des Motors als Soll-Motorleistungsindikation herangezogen werden. Beispielsweise kann bekannt sein und/oder bestimmt werden, dass der Motor bei gegebener (z.B. angenommener) Soll-Leistungsabgabe eine vorbestimmte Soll-Drehzahl erreicht und/oder halten kann.

Gemäß einem Ausführungsbeispiel des Verfahrens gemäß dem ersten beispielhaften Aspekt wird vorgeschlagen, dass das Bestimmen der Soll-Motorleistungsindikation zumindest eines der Folgenden umfasst

- Empfangen (z.B. und/oder Abrufen) der Soll-Motorleistungsindikation, insbesondere von einem Motorsteuergerät des Motors (z.B. gemeinsam mit und/oder zusätzlich zu einer Indikation der Kraftstoffzufuhr) (z.B. wobei das Motorsteuergerät hierfür die Kraftstoffzufuhr heranzieht),
- Bestimmen der Kraftstoffzufuhr (z.B. mittels eines Durchflusssensors) und Bestimmen der Soll-Motorleistungsindikation basierend auf der bestimmten Kraftstoffzufuhr, insbesondere wobei das Bestimmen der Soll-Motorleistungsindikation auf einem Modell des Motors basiert (z.B. umfassend ein und/oder basierend auf einem Kennfeld des Motors) und/oder (z.B. ferner) auf einem oder mehreren (z.B. weiteren) Parametern basiert (z.B. neben der Einspritzmenge), insbesondere auf einer Temperatur (z.B. eines Teils des Motors), einer Luftzufuhr (z.B. zu einem Brennraum des Motors), einem Luftdruck (z.B. einer Umgebung des Motors) und/oder einer Kombination hieraus.

Beispielsweise kann die Soll-Motorleistungsindikation empfangen und/oder abgerufen werden, insbesondere von einem Motorsteuergerät des Motors. Beispielsweise kann alternativ oder zusätzlich (z.B. gemeinsam mit und/oder zusätzlich zu der Soll-Motorleistungsindikation) eine Indikation der Kraftstoffzufuhr (z.B. von dem Motorsteuergerät) empfangen werden. Beispielsweise kann das Motorsteuergerät basierend auf der Kraftstoffzufuhr die Soll-Motorleistungsindikation (z.B. das Drehmoment) bestimmen, z.B. basierend auf einer (z.B. gelernten und/oder modellierten) Beziehung zwischen Kraftstoffzufuhr und Ist-Motorleistungsindikation.

Auch kann alternativ oder zusätzlich das Bestimmen der Soll-Motorleistungsindikation ein Bestimmen der (z.B. aktuellen) Kraftstoffzufuhr (z.B. mittels eines Durchflusssensors) umfassen. Beispielsweise kann insbesondere in diesem Falle das Verfahren unabhängig von einem Steuergerät des Motors ausgeführt werden. Beispielsweise kann die Soll-Motorleistungsindikation basierend auf der bestimmten Kraftstoffzufuhr bestimmt werden. Beispielsweise kann hierbei das Bestimmen der Soll-Motorleistungsindikation auf einem Modell des Motors basieren (z.B. umfassend ein und/oder basierend auf einem Kennfeld des Motors) und/oder auf historischen Daten des Motors. Beispielsweise kann eine Beziehung zwischen Kraftstoffzufuhr und Motorleistung gelernt werden (z.B. unter einer Annahme, dass der Motor für eine gegebene Zeitspanne in einem normalen Betriebsmodus funktioniert und eine tatsächliche Leistung des Motors einer Soll-Leistung des Motors entspricht). Nach einem Anlernen kann somit basierend auf einer aktuellen Kraftstoffzufuhr eine Soll-Motorleistung bestimmt werden. Sowohl ein Modell des Motors als auch eine angelernte Beziehung zwischen Kraftstoffzufuhr und Motorleistung kann (z.B. ferner) auf einem oder mehreren (z.B. weiteren) Parametern basieren (z.B. über die Kraftstoffzufuhr hinausgehende Parameter), insbesondere auf einer Drehzahl des Motors, einer Temperatur (z.B. eines Teils des Motors), einer Luftzufuhr (z.B. zu einem Brennraum des Motors), einem Luftdruck (z.B. einer Umgebung des Motors), einer Vorlaufzeit des Motors, eines Alters des Motors (z.B. Berücksichtigung initialer Reibungsverluste, welche vermehrt nach Herstellung des Motors auftreten für eine begrenzte erstmalige gegebene Laufzeit die Motorleistung senken), einem Motormodell und/oder einer Motorausführung und/oder einer Kombination hieraus.

Gemäß einem Ausführungsbeispiel des Verfahrens gemäß dem ersten beispielhaften Aspekt wird vorgeschlagen, dass die Ist-Motorleistungsindikation zumindest eines der Folgenden angibt

- ein Ist-Motordrehmoment des Motors und/oder eine Ist-Motorleistung des Motors (z.B. entsprechend Ist-Eingangsleistung des Generators) und/oder
- eine Ist-Generatorausgangsleistung des Generators, einen Ist-Generatorausgangsstrom des Generators, und/oder eine Ist-Generatorausgangsspannung des Generators.

Im Wesentlichen analog zur Soll-Motorleistungsindikation können sowohl mechanische Kenngrößen der Motorausgabe (z.B. im Wesentlichen entsprechend einer Eingabe an den Generator) als auch elektrische Kenngrößen der Generatorausgabe als Ist-Motorleistungsindikation herangezogen werden.

Auch kann alternativ oder zusätzlich eine Ist-Drehzahl des Motors als Ist-Motorleistungsindikation herangezogen werden. Insbesondere wurde erkannt, dass aus einem Absacken der Ist-Drehzahl unterhalb eine (z.B. gegebene (z.B. angenommene) Soll-Drehzahl auf eine reduzierte Ist-Motorleistung geschlossen werden kann.

Gemäß einem Ausführungsbeispiel des Verfahrens gemäß dem ersten beispielhaften Aspekt wird vorgeschlagen, dass der Motorbetriebszustand zumindest eines der Folgenden umfasst

- eine (z.B. geschätzte) Ist-Kraftstoffverbrennungsrate des Motors, insbesondere eine Ist-Kraftstoffverbrennungsrate unterhalb einer vorbestimmten (z.B. gewünschten) Soll-Kraftstoffverbrennungsrate (z.B. um einen vorbestimmten Faktor (z.B. höchstens oder zumindest 0,95, 0,9, 0,85, 0,8, 0,75) und/oder Differenz (z.B. höchstens oder mindestens 0,01l/h, 0,02l/h, 0,05l/h, 0,1l/h, 0,2l/h, 0,5l/h, 1l/h)) oder
- einer Unterleistung (z.B. oder Drehmoment, z.B. bei gegebener Drehzahl) des Motors (z.B. geringere tatsächliche Leistung (z.B. oder Drehmoment, z.B. bei gegebener Drehzahl) als basierend auf zugeführter Kraftstoffmenge zu erwarten ist)(z.B. um einen vorbestimmten Faktor (z.B. höchstens oder zumindest 0,95, 0,9, 0,85, 0,8 oder 0,75) und/oder Differenz (z.B. höchstens oder mindestens 0,01kW, 0,02kW, 0,05kW, 0,1kW, 0,2kW, 0,5kW, 1kW oder 2kW)).

Der Motorbetriebszustand kann insbesondere eine (z.B. geschätzte) Ist-Kraftstoffverbrennungsrate des Motors umfassen. Die Kraftstoffverbrennungsrate kann beispielsweise in Prozent angegeben und/oder bestimmt werden, z.B. als Relation zwischen verbrannter und zugeführter (z.B. eingespritzter) Kraftstoffmenge oder als absolute Angabe. Beispielsweise kann ein Motorbetriebszustand angeben, ob und/oder zu welchem Grad eine Ist-Kraftstoffverbrennungsrate unterhalb einer vorbestimmten (z.B. gewünschten) Soll-Kraftstoffverbrennungsrate (z.B. 100%, 99%, 98%, 95%, 90% verbrannter Kraftstoff) abweicht. Beispielsweise kann der Motorbetriebszustand angeben, ob die tatsächliche Kraftstoffverbrennungsrate um einen vorbestimmten Faktor (z.B. höchstens oder zumindest 0,95, 0,9, 0,85, 0,8, 0,75) und/oder eine vorbestimmte Differenz (z.B. höchstens oder mindestens 0,01l/h, 0,02l/h, 0,05l/h, 0,1l/h, 0,2l/h, 0,5l/h, 1l/h)) von der gewünschten Soll-Kraftstoffverbrennungsrate abweicht.

Alternativ oder zusätzlich kann der Motorbetriebszustand eine Unterleistung (z.B. oder Unterdrehmoment, z.B. bei gegebener Drehzahl) des Motors betreffen. Beispielsweise kann die tatsächliche Motorleistung (z.B. oder Drehmoment, z.B. bei gegebener Drehzahl) geringer ausfallen als basierend auf zugeführter Kraftstoffmenge zu erwarten ist. Die Unterleistung und/oder das Unterdrehmoment können z.B. relativ angegeben und/oder bestimmt werden (z.B. relativ zu einer Soll-Motorleistung und/oder zu einem Soll-Motordrehmoment). Der Betriebszustand kann insbesondere eine Abweichung der Motorleistung und/oder des Motordrehmoment von einem jeweiligen Soll-Wert um einen vorbestimmten Faktor (z.B. höchstens oder zumindest 0,95, 0,9, 0,85, 0,8 oder 0,75) und/oder um eine Differenz (z.B. höchstens oder mindestens, falls Leistung, 0,01kW, 0,02kW, 0,05kW, 0,1kW, 0,2kW, 0,5kW, 1kW oder 2kW oder, falls Drehmoment, 0,01Nm, 0,02Nm, 0,05Nm, 0,1Nm, 0,2Nm, 0,5Nm, 1Nm oder 2Nm) angeben.

Die Unterleistung kann beispielsweise ein direktes (z.B. rechnerisches) Ergebnis des Vergleichs (z.B. Differenz oder Quotient) zwischen Soll- und Ist-Motorleistungsindikation gemäß dem ersten Aspekt sein.

Gemäß einem Ausführungsbeispiel des Verfahrens gemäß dem ersten beispielhaften Aspekt wird vorgeschlagen, dass der Vergleich umfasst

- Bestimmen einer Ist-Vergleichsgröße (z.B. Ist-Eingangsleistung oder Ist-Eingangsdrehmoment des Generators, Ist-Ausgangsleistung, Ist-Ausgangsstrom oder Ist-Ausgangsspannung des Generators) basierend auf der Ist-Motorleistungsindikation,
- Bestimmen einer Soll-Vergleichsgröße (z.B. Soll-Ausgangsleistung oder Soll-Drehmoment des Motors (z.B. gleichbedeutend mit Soll-Eingangsleistung oder Soll-Drehmoment des Generators); z.B. Soll-Ausgangsleistung des Generators) basierend auf der Soll-Motorleistungsindikation und

- Vergleichen (z.B. Subtraktion und/oder Division) der Ist-Vergleichsgröße mit der Soll-Vergleichsgröße.

Sowohl die Soll-Motorleistungsindikation als auch die Ist-Motorleistungsindikation können, wie bereits ausgeführt, mechanische Ausgabegrößen (z.B. Leistung oder Drehmoment) des Motors oder elektrische Ausgabegrößen (z.B. Leistung) des Generators betreffen. Um diese beiden Größen vergleichbar zu machen, kann zumindest eine der beiden oder beide im Rahmen des Vergleichs zunächst in eine jeweilige Vergleichsgröße umgerechnet werden, insbesondere sodass gleichartige Größen (z.B. Ist-Leistung mit Soll-Leistung) miteinander verglichen werden.

Gemäß einem Ausführungsbeispiel des Verfahrens gemäß dem ersten beispielhaften Aspekt wird vorgeschlagen, dass die Soll-Motorleistungsindikation und/oder die Ist-Motorleistungsindikation jeweils Momentanwerte angeben und/oder Mittelwerte angeben, wobei ein jeweiliger Mittelwert über eine (z.B. gleichlange und/oder gleichzeitige) Zeitspanne vorbestimmter Länge (z.B. höchstens oder mindestens 1s, 10s, 15s, 20s, 30s, 40s, 50s, 1min, 2min, 3min, 5min, 10min, oder 15min) gemittelt ist.

Eine zeitliche Mittelung kann den Vorteil bieten, (z.B. bedeutungslose und/oder zufällige) Fluktuationen in Ausgangsgrößen von Motor und/oder Generator zu entfernen und somit eine besonders verlässliche jeweilige Vergleichsgröße für den Vergleich zwischen Ist- und Soll-Werten zu erhalten. Die Mittelung kann z.B. mit einer Mittelungsmethode wie z.B. einem (z.B. gewichteten und/oder geometrischen) Mittelwert, einem Median und/oder Kombinationen hieraus bestimmt werden. Insbesondere können sowohl Ist- als auch Soll-Motorleistungsindikation über einen gleichen Zeitraum und/oder mit einer gleichen Mittelungsmethode gemittelt werden.

Gemäß einem Ausführungsbeispiel des Verfahrens gemäß dem ersten beispielhaften Aspekt umfasst das Verfahren ferner Auslösen zumindest einer Maßnahme basierend auf dem bestimmten Motorbetriebszustand (z.B. falls Betriebszustand für unerwünscht bestimmt wird; z.B. bei Unterleistung und/oder schlechter Kraftstoffverbrennungsrate).

Durch das (z.B. automatisierte) Auslösen einer Maßnahme basierend auf dem Motorbetriebszustand kann das Verfahren in besonderem Maße den technischen Effekt erzielen, dass unvorteilhafte Betriebszustände (z.B. von Bedienern wie z.B. einem Fahrer des Fahrzeugs und/oder von einem Überwachungssystem) erkannt und frühzeitig behoben werden können. Beispielsweise kann hierdurch verhindert werden, dass der Motor unbemerkt über ausgedehnte Zeiträume mit Unterleistung/-drehzahl und/oder mit unvollständiger Kraftstoffverbrennung läuft. Somit kann beispielsweise verhindert werden, dass sich ein im Abgaspfad angeordneter Diesel-Oxidationskatalysator überhitzt. Beispielsweise kann ferner verhindert werden, dass durch eine unvollständige (z.B. unsaubere) Verbrennung ein erhöhter Schadstoffausstoß vorliegt und/oder die Energie des Kraftstoffs zu einem reduzierten Grad in mechanische Energie umgewandelt wird, wodurch Energie des Kraftstoffs verschwendet wird und der Kraftstoffverbrauch (z.B. bei gleichbleibender Kühlleistung) steigt.

Gemäß einem Ausführungsbeispiel des Verfahrens gemäß dem ersten beispielhaften Aspekt wird vorgeschlagen, dass die Maßnahme zumindest eines der Folgenden umfasst

- Reduktion einer Ist-Ausgangsleistung des Generators, insbesondere durch Reduktion einer Leistungsaufnahme zumindest eines durch den Generator gespeisten Verbrauchers (z.B. Komponente einer Kältemaschine, z.B. Reduktion Öffnungsgrad eines Saugdruckmodulationsventils, SMV, eine Reduktion einer Leistungsaufnahme eines Verdichters (z.B. Zylinderabschaltung, Economizer-Abschaltung, Reduktion Drehzahl und/oder Kombinationen hieraus)), insbesondere (z.B. temporärer) Notlauf eines von dem Generator angetriebenen Kältekreislaufs (z.B. wobei Verdichter vollständig abgeschaltet wird),
- Ausgabe eines Signals (z.B. Alarmsignal, z.B. lokal (z.B. an Transportkältemaschine) und/oder über Telematik), und/oder
- Anpassung der Kraftstoffzufuhr zum Motor.

Beispielsweise kann die Maßnahme eine Reduktion einer Ist-Ausgangsleistung des Generators umfassen. Insbesondere kann dies durch Reduktion einer Leistungsaufnahme zumindest eines durch den Generator gespeisten Verbrauchers erreicht werden. Beispielsweise kann ein solcher Verbraucher eine Komponente der Kältemaschine sein. Zum Beispiel kann ein Öffnungsgrad eines Saugdruckmodulationsventils, SMV, reduziert werden, eine Leistungsaufnahme eines Verdichters reduziert werden (z.B. durch eine Zylinderabschaltung, eine Economizer-Abschaltung, eine Reduktion einer Drehzahl des Verdichters und/oder eine Kombination hieraus). Alternativ oder zusätzlich können weitere Verbraucher wie insbesondere zumindest ein oder mehrere Heizelemente abgeschaltet und/oder in ihrer Leistung reduziert werden. Auch kann beispielsweise als Maßnahme ein (z.B. temporärer) Notlauf eines von dem Generator angetriebenen Kältekreislaufs ausgelöst werden, wobei beispielsweise der Verdichter vollständig abgeschaltet wird.

Alternativ oder zusätzlich kann die Maßnahme eine Ausgabe eines (z.B. Warn-)Signals umfassen. Beispielsweise kann es sich um ein Alarmsignal handeln, welches beispielsweise lokal (z.B. am Fahrzeug, insbesondere an der Transportkältemaschine und/oder in einem Fahrerhaus des Fahrzeugs) ausgegeben wird und/oder entfernt ausgegeben wird, beispielsweise per Telematik, z.B. an einem Terminal (z.B. Workstation) eines Überwachungssystems für ein oder mehrere Fahrzeuge. Das Signal kann beispielsweise visuell (z.B. durch eine Anzeige wie eine Lampe, ein Display, eine sichtbare Stellung eines beweglichen Elements und/oder Kombinationen hieraus) und/oder akustisch ausgegeben werden.

Alternativ oder zusätzlich kann die Maßnahme eine Anpassung der Kraftstoffzufuhr zum Motor umfassen. Beispielsweise kann die Kraftstoffzufuhr reduziert werden, wenn bestimmt worden ist, dass eine Unterleistung/-drehmoment (z.B. Ist-Motorleistung und/oder Ist-Drehmoment unterhalb eines vorbestimmten jeweiligen Schwellwerts) vorliegt und/oder dass die Kraftstoffverbrennungsrate niedrig ist (z.B. unterhalb eines vorbestimmten Schwellwerts).

Gemäß einem Ausführungsbeispiel des Verfahrens gemäß dem ersten beispielhaften Aspekt wird vorgeschlagen, dass der Motor und/oder Generator Teil einer Transportkältemaschine sind.

Gemäß einem zweiten beispielhaften Aspekt wird eine Vorrichtung (z.B. Transportkältemaschinen-Steuereinheit) vorgeschlagen, umfassend Mittel zum Steuern und/oder Ausführen des Verfahrens nach dem ersten Aspekt.

Die Vorrichtung kann z.B. ein Steuergerät der Transportkältemaschine und/oder eine Telematikeinheit umfassen. Die Vorrichtung kann beispielsweise Teil der Transportkältemaschine und/oder Teil des Straßennutzfahrzeugs sein.

Die Mittel umfassen beispielsweise zumindest einen Prozessor und einen Speicher, insbesondere wobei der Speicher Instruktionen umfasst, die, wenn sie von dem Prozessor ausgeführt werden, dazu führen, dass die Vorrichtung das Verfahren ausführt und/oder weitere Mittel wie beispielsweise zumindest ein Kommunikationsmittel, mit dem die Vorrichtung beispielsweise mit zumindest einer weiteren Komponente kommunizieren kann, beispielsweise mit der Transportkältemaschine, z.B. einem Steuergerät der Transportkältemaschine und/oder mit dem Motor, z.B. mit einer Motorsteuereinrichtung.

Gemäß einem Ausführungsbeispiel der Vorrichtung gemäß dem zweiten beispielhaften Aspekt wird vorgeschlagen, dass die Mittel zumindest eines der Folgenden umfassen

- zumindest einen Prozessor (z.B. zum Bestimmen der Soll-/Ist-Motorleistungsindikation und/oder des Motorbetriebszustands) (z.B. in Kombination mit einem Speicher),
- zumindest einen Sensor (z.B. Durchflusssensor, Stromsensor, Spannungssensor, Temperatursensor und/oder Kombinationen hieraus, z.B. zum Bestimmen der Generatorausgangsleistung und/oder des Kraftstoffzuflusses zum Motor),
- zumindest eine Kommunikationseinrichtung (z.B. drahtgebunden und/oder drahtlos) (z.B. zur Kommunikation mit zumindest einer weiteren Einrichtung, z.B. einem Motorsteuergerät (z.B. zum Empfangen der Kraftstoffzufuhr und/oder zum Versenden von Steuerbefehlen an den Motor (z.B. zur Reduktion der Kraftstoffzufuhr)) und/oder einer Telematikeinrichtung und/oder einer entfernten Einrichtung, z.B. einem Server),

- zumindest eine Ausgabeeinrichtung (z.B. ein Leuchtelement, beispielsweise eine Alarmleuchte, ein Anzeigeelement, z.B. ein Display; z.B. zur Ausgabe eines Signals; z.B. Audioausgabevorrichtung, insbesondere Lautsprecher), und/oder
- zumindest einen Aktor und/oder eine Steuerungseinrichtung für zumindest einen Aktor (z.B. ein Ventil, eine Motorsteuerung eines Verdichtermotors und/oder Kombinationen hieraus).

Gemäß einem dritten beispielhaften Aspekt wird ein System umfassend eine Vorrichtung gemäß dem zweiten beispielhaften Aspekt und ein Motorsteuergerät für einen Motor (z.B. umfassend einen Diesel-Oxidationskatalysator), wobei

- die Vorrichtung von dem Motorsteuergerät zumindest die Soll-Motorleistungsindikation empfängt und/oder
- die Vorrichtung dem Motorsteuergerät zumindest die Anpassung der Kraftstoffzufuhr zum Motor vorgibt (z.B. als Maßnahme basierend auf einem bestimmten Motorbetriebszustand).

Gemäß einem vierten beispielhaften Aspekt wird eine Transportkältemaschine vorgeschlagen umfassend

- einen Generator, einen Motor (z.B. umfassend einen Diesel-Oxidationskatalysator) und die Vorrichtung gemäß dem zweiten beispielhaften Aspekt (z.B. wobei der Motor basierend auf dem Generator gemäß dem Verfahren überwacht werden) oder
- ein System gemäß dem dritten beispielhaften Aspekt.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs jedoch als notwendiger Bestandteil der vorliegenden Erfindung erachtet werden.

Es zeigen:

Fig. 1     eine schematische Darstellung einer beispielhaften Ausführungsform eines Straßennutzfahrzeugs gemäß der Erfindung;

Fig. 2      eine schematische Darstellung einer beispielhaften Ausführungsform eines Straßennutzfahrzeugs umfassend eine Transportkältemaschine gemäß der Erfindung;

Fig. 3      eine schematische Darstellung einer beispielhaften Ausführungsform der Erfindung;

Fig. 4a,b   schematische Darstellungen von Verhältnissen zwischen Motorleistung und Generatorleistung gemäß beispielhaften Ausführungsformen der Erfindung;

Fig. 5a-c   schematische Darstellungen von zeitlichen Verläufen von Motorleistung und Generatorleistung gemäß beispielhaften Ausführungsformen der Erfindung;

Fig. 6      schematische Darstellung von zeitliche variablen Verhältnissen zwischen Motorleistung und Generatorleistung gemäß einer beispielhaften Ausführungsform der Erfindung;

Fig. 7      ein Flussdiagramm gemäß einer beispielhaften Ausführungsform der Erfindung;

Fig. 8      ein Blockdiagramm gemäß einer beispielhaften Ausführungsform der Erfindung;

Fig. 9      beispielhafte Speichermedien.

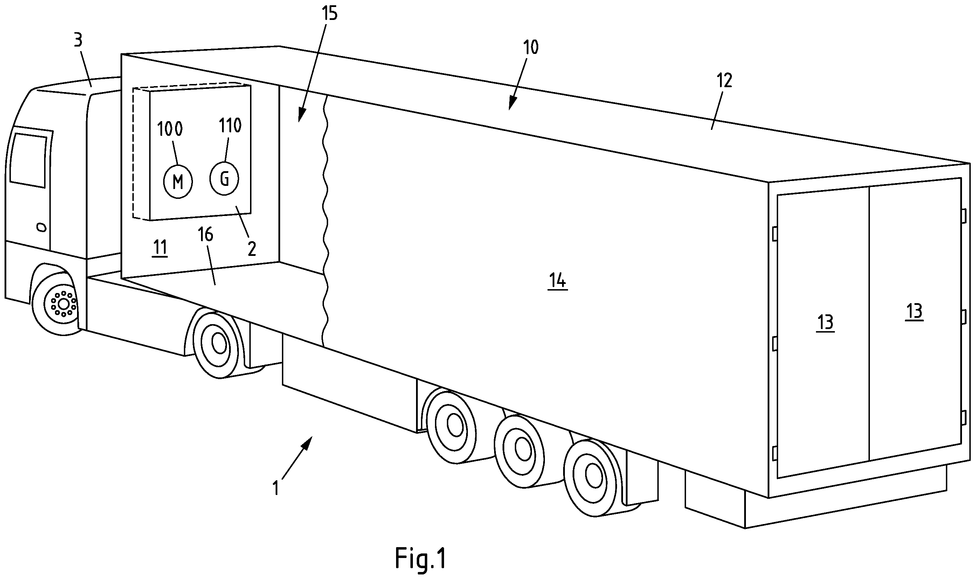

Fig. 1 ist eine schematische Darstellung einer beispielhaften Ausführungsform eines Fahrzeugs 1 gemäß der Erfindung, beispielsweise nach dem ersten Aspekt der Erfindung.

Das gezeigte Fahrzeug 1 ist ein Nutzfahrzeug 1, genauer ein Anhänger 1, genauer noch ein Sattelauflieger 1, mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung gemäß dem zweiten Aspekt der Erfindung angeordnet. Hierbei kann es sich beispielsweise um eine Steuerungseinheit der Transportkältemaschine 2 des Anhängers 1 handeln.

Die Transportkältemaschine 2 dient zum Kühlen und/oder Heizen des Laderaums 15, so dass temperaturempfindliche Güter in dem Laderaum 15 transportiert werden können. Zu diesem Zweck kann die Transportkältemaschine 2 beispielsweise Luft kühlen und/oder heizen und anschließend in den Laderaum 15 blasen.

Die Transportkältemaschine umfasst und/oder ist angeschlossen an einen (Verbrennungs-)Motor 100 und einen Generator 110, wobei der Generator 110 von dem Motor 100 angetrieben wird.

Der Sattelauflieger 1 wird von einem Zugfahrzeug 3 gezogen.

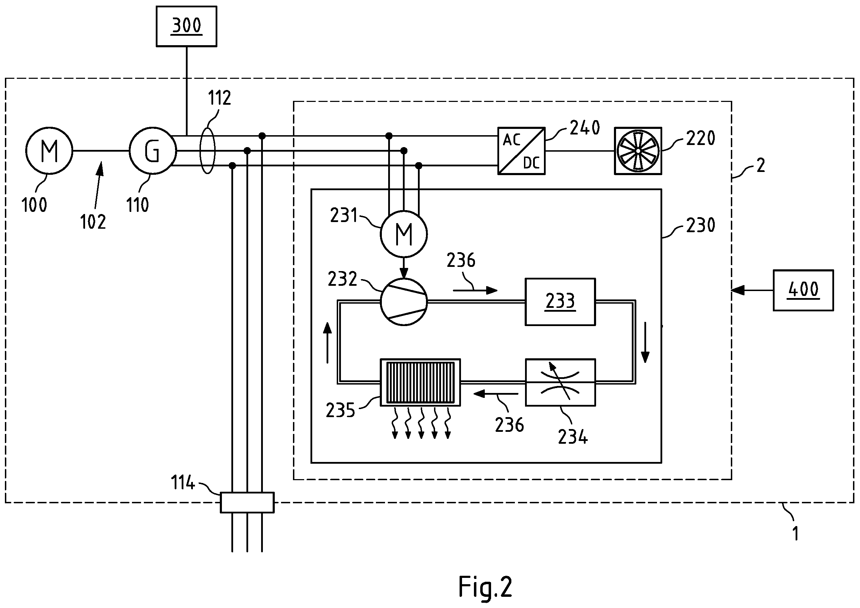

Figur 2 zeigt ein schematisches Schaltbild eines Straßennutzfahrzeugs 1 gemäß einer beispielhaften Ausführungsform gemäß der Erfindung wie es in Fig. 1 gezeigt ist.

Zu sehen ist eine Transportkältemaschine 2. Diese ist angeschlossen an einen Generator 110, welcher von einem Verbrennungsmotor 100 über eine Verbindung 102 angeschlossen ist. Der Generator 110 wird also von einem Motor 100 angetrieben.

Wobei der Motor 100 insbesondere in der Transportkältemaschine 2 integriert sein kann und insbesondere ein Dieselmotor sein kann. Der Motor 100 bezieht Kraftstoff aus einer dafür vorgesehenen Quelle, z.B. aus einem Kraftstofftank. Ein Zufluss von Kraftstoff zu dem Motor 100 kann beispielsweise von einem nicht gezeigten Durchflusssensor und/oder von einem Motorsteuergerät bestimmt werden.

Der Generator 110 ist über eine elektrische Verbindung 112 an die Transportkältemaschine 2 angeschlossen. Insbesondere kann die Verbindung 112 dreiphasig ausgeführt sein, zur Übertragung einer dreiphasigen Wechselspannung. Die jeweiligen Verbindungen können beispielsweise unmittelbar ausgeführt sein. Auch können mittelbare Verbindungen vorgesehen sein, beispielsweise über ein jeweiliges Relais.

Die Transportkältemaschine 2 kann zusätzlich über weitere Energiequellen verfügen, welche beispielsweise über einen Energieversorgungsanschluss 114 angeschlossen sind, z.B. an ein Energieversorgungsnetz und/oder einen Energiespeicher wie beispielsweise einen Hochspannungs-Akkumulator. Der Energieversorgungsanschluss 114 kann beispielsweise in Form einer Steckdose, wie beispielsweise einer Drehstromsteckdose (bspw. CEE), vorgesehen sein. Auch kann der Energieversorgungsanschluss 114 die Form eines Ladeanschlusses, insbesondere einer Ladesteckers und/oder einer Ladebuchse annehmen, insbesondere eines im automobilen Bereich üblichen Ladeanschlusses.

An der Verbindung 112 kann die Ausgangsleistung des Generators 110 separat gemessen werden, insbesondere unabhängig von Energieflüssen aus anderen Quellen. Beispielsweise kann an der Verbindung 112 zumindest ein Sensor 300 vorgesehen sein, beispielsweise zumindest ein Stromsensor 300 und/oder zumindest ein Spannungssensor 300, beispielsweise pro Phase des dreiphasigen Anschlusses.

Der Generator 110 ist insbesondere dazu eingerichtet, elektrische Energie in Form einer Wechselspannung (z.B. eine dreiphasige Wechselspannung mit einer Spannung in Höhe von 250V bis 690 V (z.B. 400 V) (Effektivwert der verketteten Spannungen)) bereitzustellen. Es handelt sich also insbesondere um einen Wechselspannungsgenerator.

Die Transportkältemaschine 2 umfasst zumindest eine temperaturbeeinflussende Komponente 230, insbesondere einen Kältekreislauf 230. Auch kann als temperaturbeeinflussende Komponente ein nicht gezeigtes Heizelement vorgesehen sein. Der Kältekreislauf 230 umfasst einen Elektromotor 231, einen Kompressor 232, einen Kondensator 233, ein Drosselventil 234 und einen Wärmetauscher 235. In dem Kältekreislauf 230 zirkuliert das Kältemittel 236.

Die kälteerzeugende Komponente 230 umfasst ferner einen Kühlkreis. In dem Wärmetauscher 235 wird das zuvor verflüssigte Kältemittel 236 expandiert und entzieht dabei einem getrennt von dem Kältemittel durch den Wärmetauscher 235 geleiteten Luftstrom Wärme, so dass die Luft des Luftstroms gekühlt wird. Die gekühlte Luft dieses Luftstroms wird anschließend beispielsweise in den Laderaum 15 des Sattelaufliegers 1 geblasen, um diesen zu kühlen.

Der Motor 231 kann über einen dreiphasigen Anschluss betrieben werden. Insbesondere kann der Kältekreislauf 230 mit einer dreiphasigen Wechselspannung (z.B. eine dreiphasige Wechselspannung mit einer Spannung in einem Hochspannungsband, insbesondere in Höhe von 250V bis 690 V (z.B. 400 V) (Effektivwert der verketteten Spannungen)), betrieben werden. Der Motor 231 kann Teil der kälteerzeugenden Komponente 230 sein.

Die Transportkältemaschine 2 umfasst ferner zumindest einen Lüfter 220. Der Lüfter 220 ist beispielsweise dazu eingerichtet, mit Wechselspannung (z.B. einphasig) oder mit Gleichspannung (z.B. in einem 48V-Spannungsband) mit elektrischer Energie versorgt zu werden. Hierfür kann ein Wechselspannungs-Gleichspannungs-Umwandler 240 (AC/DC-Wandler) vorgesehen sein. Die Transportkältemaschine 2 kann insbesondere mehrere Lüfter umfassen, welche beispielsweise verschiedene Funktionen erfüllen.

Insbesondere kann die Transportkältemaschine zumindest einen Verdampferlüfter 220, einen Kondensatorlüfter 220 und einen Generator-Lüfter 220 umfassen.

Die Transportkältemaschine umfasst einen Spannungswandler 240. Der Spannungswandler 240 ist insbesondere dazu eingerichtet, eine Wechselspannung, insbesondere eine dreiphasige Wechselspannung, insbesondere mit einer Spannung in Höhe von 250V bis 690 V (z.B. 400 V) (Effektivwert der verketteten Spannungen)), in eine Gleichspannung, insbesondere in ein 48V-Spannungsband, umzuwandeln. Auf diese Art und Weise kann der Spannungswandler 240 eine Versorgung des zumindest einen Lüfters 220 aus der Hochspannungs-Energiequelle 110 ermöglichen. Der Spannungswandler 240 ist insbesondere unidirektional und erlaubt lediglich einen Leistungsfluss ausgehend von der Wechselspannung (bzw. dem Hochspannungsband) zu der Gleichspannung (bzw. dem 48V-Spannungsband).

Die Transportkältemaschine 2 weist als elektrische Verbraucher unter anderem einen Anlasser auf. Auch kann zumindest eine Telematikkomponente vorgesehen sein, welche beispielsweise Teil der Transportkältemaschine 2 ist oder auch nicht Teil der Transportkältemaschine 2 ist. Die Telematikkomponente kann dazu eingerichtet sein, Informationen ausgehend von dem Fahrzeug 1 an eine oder mehrere Einrichtungen wie z.B. Server zu übermitteln und/oder Informationen zu empfangen. Die Kommunikation kann hierbei drahtlos ausgestaltet sein.

Die Transportkältemaschine 2 und/oder das Straßennutzfahrzeug 1 kann ferner eine Steuerungseinrichtung 400 aufweisen, beispielsweise gemäß des zweiten beispielhaften Aspekts und/oder konfiguriert zur Ausführung und/oder Steuerung eines Verfahrens nach dem ersten beispielhaften Aspekt. Die Steuerungseinrichtung kann beispielsweise mit zumindest einem der Lüfter 220, mit dem Kältekreislauf 230, insbesondere mit zumindest einem Ventil und/oder zumindest dem Motor in Wirkverbindung stehen und/oder in Wirkverbindung mit dem Verbrennungsmotor 100 stehen, beispielsweise mittels eines nicht gezeigten Steuergeräts des Motors 100. Auch kann die Steuerungseinrichtung 400 mit dem zumindest einen Sensor 300 verbunden sein. Auch kann die Steuerungseinrichtung 400 beispielsweise Eine gegebene Verbindung zwischen der Steuerungseinrichtung 400 und anderen Komponenten kann insbesondere eine Kommunikationsverbindung, insbesondere eine Steuerungsverbindung sein. Eine Kommunikationsverbindung setzt keine unmittelbare physische Verbindung zwischen den Komponenten voraus. Beispielsweise kann eine Kommunikationsverbindung als eine Datenverbindung, beispielsweise über einen Datenbus, ermöglicht werden. Die Steuerungseinrichtung 400 kann die temperaturbeeinflussende Komponente 230 steuern. Die Steuerungseinrichtung 400 kann hierbei insbesondere eine Temperierleistung (z.B. Kälte- und/oder Heizleistung) regulieren, insbesondere reduzieren oder erhöhen. Durch Regulierung einer Leistungsaufnahme der Verbraucher kann das Steuergerät 400 einstellen, wie viel Leistung dem Generator und/oder Motor abverlangt wird. Auch kann die Steuerungseinrichtung 400 Einfluss auf den Motor nehmen, beispielsweise die Kraftstoffzufuhr regulieren, insbesondere reduzieren oder erhöhen. Beispielsweise kann die Steuerungseinrichtung 400 darüber hinaus Signale ausgeben. Die Steuerungseinrichtung 400 kann z.B. in Kommunikation mit der Telematikeinheit stehen, beispielsweise Informationen an diese übermitteln.

Die Steuerungseinrichtung 400 kann beispielsweise zumindest einen Eingang umfassen. Beispielsweise kann die Steuerungseinrichtung 400 mit einem Sensor verbunden sein, insbesondere mit dem Stromsensor und/oder Spannungssensor 300 und/oder mit einem Durchflusssensor.

Die Steuerungseinrichtung 400 kann ferner eine Temperierleistung (z.B. Kälte- und/oder Heizleistung) der zumindest eine kälteerzeugenden Komponente 230 der Transportkältemaschine 2 in Abhängigkeit von einer von einem Temperatursensor erfassten Temperatur des Laderaums steuern. Die Kühlleistung kann beispielsweise als die aus einem zu kühlenden Innenraum heraustransportierte Wärme pro Zeiteinheit bestimmt sein. Beispielsweise kann die Abweichung der von dem Temperatursensor erfassten Temperatur von einer Soll-Temperatur bestimmt werden und in Abhängigkeit von dieser Abweichung eine Kälteleistung der kälteerzeugenden Komponente 230 eingestellt werden. Die Kühlleistung kann beispielsweise mit der Leistung der kälteerzeugenden Komponente, insbesondere mit der effektiven Kühlleistung oder auch mit der aufgenommenen elektrischen Leistung korrespondieren. Die Steuerung des zumindest einen Lüfters 220 durch die Steuerungseinrichtung 400 kann ebenfalls in Abhängigkeit von einer von dem zumindest einen Temperatursensor empfangenen Temperatur geschehen.

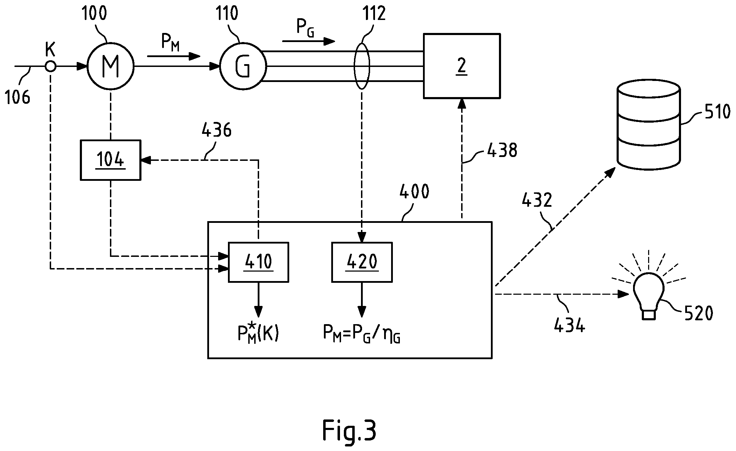

Fig. 3 zeigt einen ähnlichen Aufbau wie Fig. 2, in welchem einige weitere Details und Leistungsflüsse sowie Kommunikations- und/oder Wirkverbindungen eingezeichnet sind.

Der Verbrennungsmotor 100 erhält von einer Kraftstoffquelle Kraftstoff K, welcher beispielsweise über eine sensorisch überwachte Verbindung 106 bereitgestellt wird. Die Steuerungseinrichtung 400 kann die Kraftstoffzufuhr beispielsweise mittels eines Sensors an der Verbindung 106 erfassen und/oder von einem Motorsteuergerät 104 des Motors 100 erhalten. Auch gezeigt ist eine Wirkverbindung 436 zwischen der Steuerungsrichtung 400 und dem Motorsteuergerät 104, beispielsweise zur Regulierung der Motorleistung und/oder Kraftstoffzufuhr.

Von dem Verbrennungsmotor 100 treibt einen Generator 100 mit einer tatsächlichen mechanischen Motorleistung $P_M$ (bzw. einem mechanischen Drehmoment) an. Es wurde erkannt, dass die mechanische Leistung $P_M$ nur aufwändig messbar ist, insbesondere im laufenden Betrieb der Transportkältemaschine.

Der Generator 110 empfängt die mechanische Leistung $P_M$ vom Verbrennungsmotor 100 (beispielsweise über eine Welle und/oder einen Riemen) und generiert hieraus eine elektrische Generatorausgangsleistung $P_G$. Beispielsweise ist eine Drehzahl des Verbrennungsmotors hierbei identisch oder proportional zu einer Drehzahl des Generators. Die Generatorausgangsleistung $P_G$ kann beispielsweise an der Verbindung 112 durch zumindest einen Sensor (nicht abgebildet), z.B. einen Stromsensor und/oder einen Spannungssensor, gemessen werden. Die elektrische Leistung $P_G$ wird an die übrigen Komponenten der Transportkältemaschine 2 geliefert. Zwar sind

Transportkältemaschine 2 und Motor 100 sowie Generator 110 getrennt dargestellt. Jedoch können auch Motor 100 und/oder Generator 110 mit der Transportkältemaschine 2 integriert sein. Es wurde erkannt, dass die elektrische Leistung $P_G$ relativ einfach zu messen ist.

Die Steuerungseinrichtung 400 umfasst eine funktionale Einheit 410 zur Bestimmung einer Soll-Motorleistungsindikation $P_M^*(K)$ in Abhängigkeit von der Kraftstoffzufuhr K. Beispielsweise kann die Soll-Motorleistungsindikation von dem Motorsteuergerät 104 empfangen werden und/oder basierend auf einer gemessenen Kraftstoffzufuhr bestimmt (z.B. errechnet) werden. Beispielsweise kann eine Drehmomentangabe von dem Motorsteuergerät 104 empfangen werden und von der Steuerungseinrichtung 400 durch Multiplikation mit einer Drehzahl des Motors in eine Motorleistung umgerechnet werden. Die Drehzahl des Verbrennungsmotors kann beispielsweise basierend auf einer Frequenz des vom Generator erzeugten Stroms und/oder der Spannung bestimmt werden. Auch kann hierfür alternativ oder zusätzlich ein Drehzahlsensor eingesetzt werden.

Auch umfasst die Steuerungseinrichtung 400 eine funktionale Einheit 420 zur Bestimmung einer Ist-Motorleistungsindikation $P_M(P_G) = P_G / \eta_G$. Die Ist-Motorleistungsindikation kann beispielsweise basierend auf der Generatorausgangsleistung $P_G$ und einem (z.B. vorbekannten) Wirkungsgrad des Generators $\eta_G$ bestimmt werden als $P_M(P_G) = P_G / \eta_G$. Alternativ kann auch die Generatorausgangsleistung $P_G$ selbst als Ist-Motorleistungsindikation herangezogen werden und beispielsweise die Soll-Motorleistungsindikation für einen Vergleich mit dieser Ist-Motorleistungsindikation mit dem Wirkungsgrad $\eta_G$ multipliziert werden.

Die Steuerungseinrichtung 400 kann zur Bestimmung eines Betriebszustands des Verbrennungsmotors 100 einen Vergleich zwischen der Ist-Motorleistungsindikation $P_M(P_G)$ und der Soll-Motorleistungsindikation $P_M^*(K)$ vornehmen. Eine Abweichung zwischen Ist- und Soll-Motorleistungsindikation kann beispielsweise darauf hinweisen, dass der Verbrennungsmotor zugeführten Kraftstoff unvollständig verbrennt und/oder der Wirkungsgrad des Verbrennungsmotors gegenüber einem erwarteten Wert herabgesetzt ist.

Basierend auf dem bestimmten Betriebszustand, insbesondere im Falle einer geringeren Ist-Motorleistungsindikation als eine Soll-Motorleistungsindikation (z.B. indikativ für eine Unterleistung und/oder unvollständige Kraftstoffverbrennung), kann die Steuerungseinrichtung 400 zumindest eine Maßnahme auslösen. Beispielsweise kann die Steuerungseinrichtung 400 als eine Maßnahme Einfluss auf den Verbrennungsmotor 100 nehmen, z.B. über das Steuergerät 104, beispielsweise eine Reduktion der Motorleistung und/oder Kraftstoffzufuhr bewirken. Alternativ oder zusätzlich kann die Steuerungseinrichtung 400 über eine Wirkverbindung 438 Einfluss auf die Transportkältemaschine 2, insbesondere auf die zumindest eine temperaturbeeinflussende Komponente 230 und/oder zumindest einen der zumindest einen Lüfter 220 nehmen, insbesondere deren jeweilige Leistungsaufnahme drosseln. Alternativ oder zusätzlich kann die Steuerungseinrichtung 400 über eine Kommunikationsverbindung 432, beispielsweise mittels einer Telematikeinrichtung des Straßennutzfahrzeugs 1, ein Signal und/oder eine Information an einen Server 510 übermitteln. Beispielsweise kann der Server 510 Teil eines Telematiksystems sein. Beispielsweise kann basierend auf einer Mitteilung eines Motorbetriebszustands an den Server 510 eine Wartungs- und/oder Instandhaltungsmaßnahme des Motors 100 ausgelöst werden. Alternativ oder zusätzlich kann die Steuerungseinrichtung 400 ein Signal über eine Ausgabeeinrichtung 520 ausgeben. Beispielsweise kann die Ausgabeeinrichtung 520 wie in Fig. 3 gezeigt eine Anzeigeeinrichtung, insbesondere eine Leuchte und/oder ein Display sein, beispielsweise integriert mit der Transportkältemaschine 2 und/oder dem Straßennutzfahrzeug 1. Die Ausgabeeinrichtung 520 kann auch akustisch ausgeführt sein, z.B. als Lautsprecher. Die Ausgabeeinrichtung 520 kann z.B. über eine Verbindung 434 von der Steuerungseinrichtung 400 ansprechbar sein.

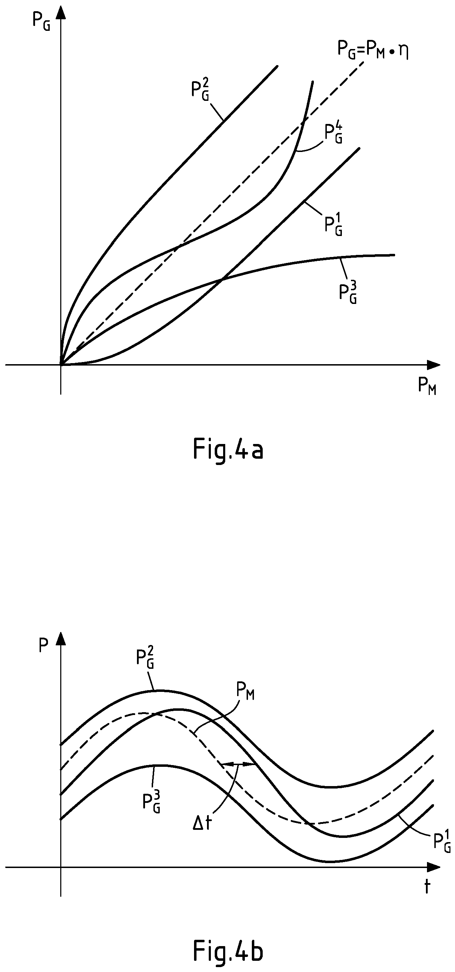

Fig. 4a zeigt eine Beziehung zwischen Generatorausgangsleistung $P_G$ und Motorausgangsleistung $P_M$. In einer besonders simplen Beziehung können $P_G$ und $P_M$ zueinander proportional sein wie als gestrichelte Linie gezeigt. Proportionalitätsfaktor kann hierbei der Wirkungsgrad $\eta_G$ des Generators sein. Alternativ kann, wie als $P_G^1$ und $P_G^2$ gezeigt, eine teilweise nicht-lineare Beziehung zu einem Versatz zwischen $P_G$ und $P_M$ führen. Auch kann, siehe $P_G^3$, eine durchgehend nichtlineare Beziehung zwischen $P_G$ und $P_M$ vorliegen, z.B. aufgrund eines drehzahlabhängigen Wirkungsgrads des Generators $\eta_G(\omega)$. Eine ähnlich nicht-lineare, jedoch fast (z.B. im Wesentlichen) proportionale Beziehung ist ferner als $P_G^4$ bezeigt. Beispielsweise können derartige Zusammenhänge zwischen $P_G$ und $P_M$ vorbestimmt sein und vorgehalten werden. Auch kann beispielsweise eine Beziehung gelernt sein, beispielsweise auf Basis von historischen Daten.

Anstelle der tatsächlichen Generatorleistung kann auch die Soll-Generatorleistung $P_M^*(K)$ auf der Abszisse eingesetzt werden. Auch kann insbesondere die kombinierte Beziehung zwischen einer Soll-Generatorausgangsleistung $P_G^*$ und der Kraftstoffzufuhr K, $P_G^*(K,\omega) = P_M^*(K) \cdot \eta_G(\omega)$, vorbestimmt und/oder angelernt sein. Die Soll-Motorleistung $P_M^*(K)$ kann beispielsweise, wie oben ausgeführt, zumindest teilweise vom Motorsteuergerät empfangen werden und/oder modellbasiert und/oder datenbasiert bestimmt werden. Die Soll-Motorleistung kann neben der Kraftstoffzufuhr auf weiteren Faktoren basieren wie z.B. der Drehzahl, der Motortemperatur und/oder Kombinationen hieraus. Die Soll-Generatorausgangsleistung $P_G^*$ kann hierbei als Soll-Motorleistungsindikation herangezogen werden und/oder als Berechnungsgrundlage für die Soll-Motorleistungsindikation dienen.

Während Fig. 4a die statische Beziehung zwischen $P_G$ und $P_M$ angibt, zeigt Fig. 4b eine dynamische, also im zeitlichen Verlauf aufgetragene, Beziehung zwischen den beiden Leistungen. Beispielsweise ist ein Leistungsversatz bei Synchronität der Leistungsverläufe für $P_G^2$ und $P_G^3$ gezeigt. Die Generatorleistung $P_G^1$ hingegen hinkt der Motorleistung $P_M$ um einen zeitlichen Versatz $\Delta t$ hinterher.

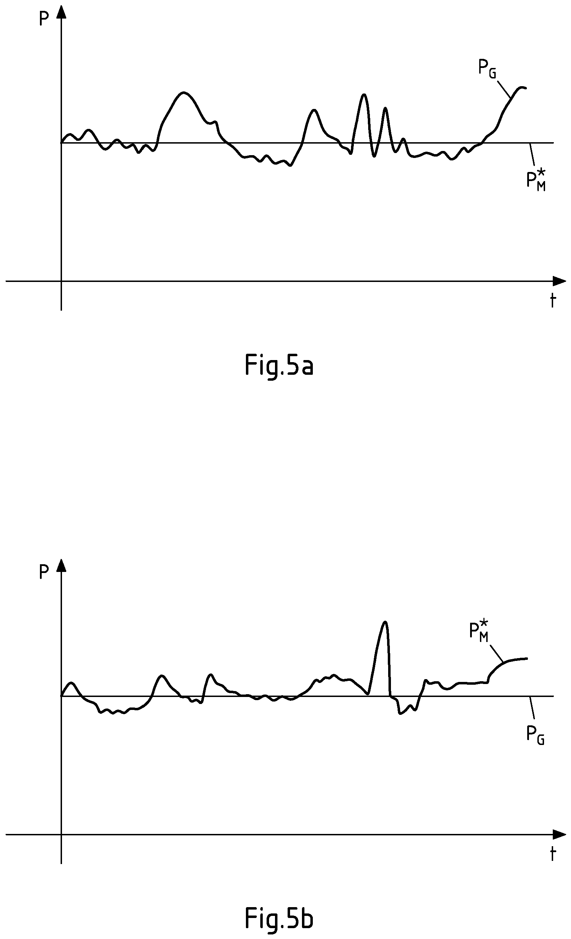

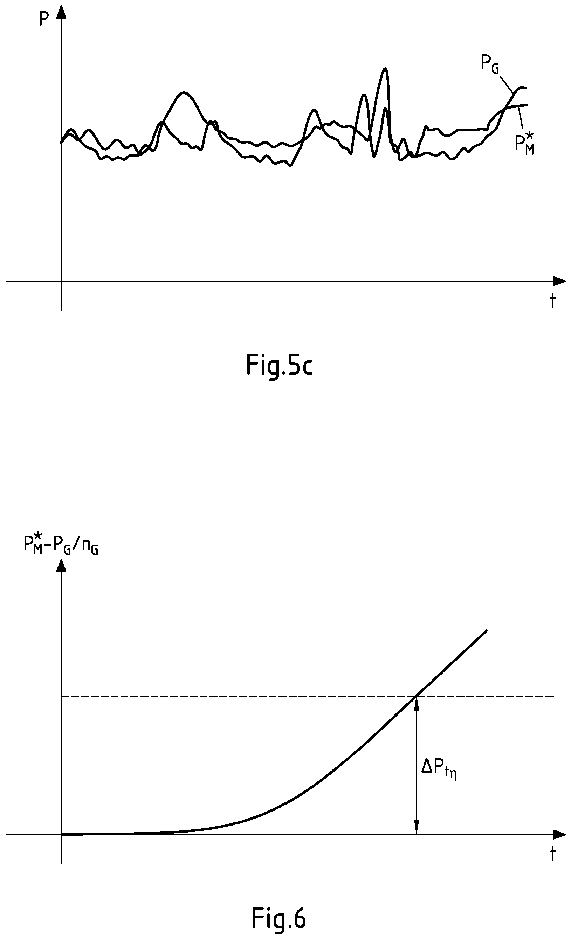

Fig. 5a,b,c illustrieren Fluktuationen von nur $P_G$ (Fig. 5a), nur $P_M^*$ (Fig. 5b) und $P_G$ und $P_M^*$ (Fig. 5c). Eine zeitliche Mittelung kann derartige Schwankungen glätten.

Fig. 6 zeigt eine steigende Abweichung zwischen $P_G$, skaliert mit dem Wirkungsgrad des Generators $\eta_G$, und $P_M^*$. Beispielsweise kann durch Verschmutzungen und/oder Verschleiß des Motors eine tatsächliche Leistung, welche der Generator bereitstellt, geringer ausfallen als basierend auf einer Kraftstoffzufuhr des Verbrennungsmotors erwartet. Die Abweichung kann im Laufe der Zeit größer werden, wie in Fig. 6 gezeigt. Es kann ein Schwellwert $\Delta P_{th}$ vorbestimmt sein, ab dem eine Betriebszustand des Motors als nicht-normal erkannt wird. Beispielsweise in diesem Falle kann eine Maßnahme ausgelöst werden. Alternativ zu einer Differenz kann auch ein Quotient betrachtet werden, wobei der Schwellwert als ein Faktor angegeben wird.

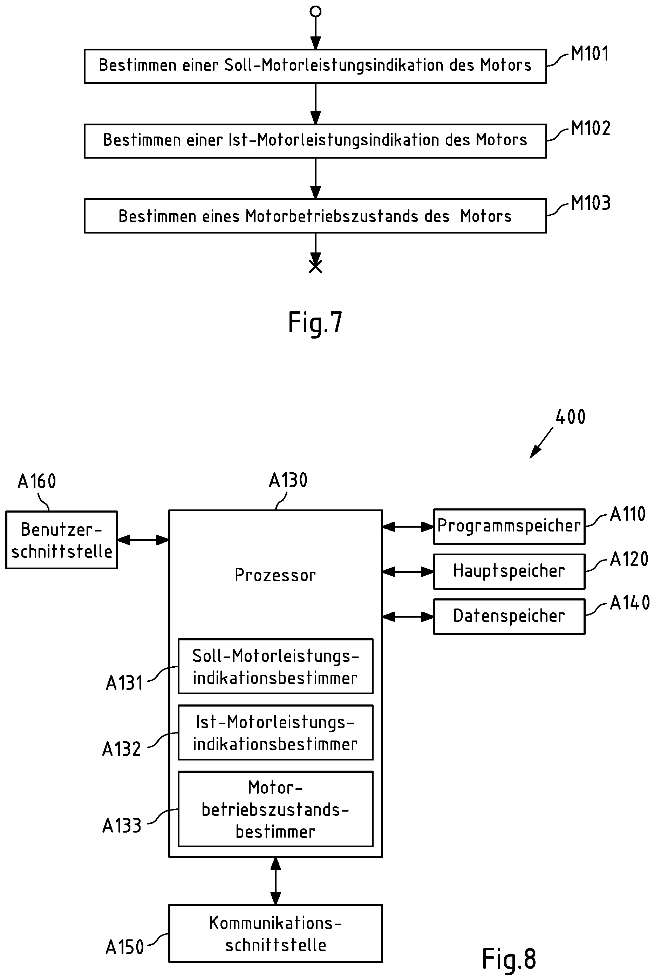

Fig. 7 zeigt ein Flussdiagramm des Verfahrens nach dem ersten Aspekt, beispielsweise ausgeführt von einer Vorrichtung nach dem zweiten Aspekt.

In einem Schritt M101 umfasst das Verfahren ein Bestimmen (z.B. Berechnen, Messen und/oder Empfangen) einer (z.B. aktuellen; z.B. zeitlich gemittelt über eine vorbestimmte Zeit) Soll-Motorleistungsindikation (indikativ für eine Soll-Motorleistung) des Motors, wobei die Soll-Motorleistungsindikation auf einer (z.B. aktuellen; z.B. zeitlich gemittelt über eine vorbestimmte Zeit) Kraftstoffzufuhrmenge basiert (z.B. Einspritzung in den Motor) (z.B. bestimmt durch Motorsteuergerät und/oder empfangen von Motorsteuergerät und/oder bestimmt basierend auf (z.B. anderweitigem) Kraftstoffflusssensor), wobei der Motor (z.B. ausschließlich und/oder als einzigen Abnehmer der Motorleistung) einen Generator antreibt.

In einem Schritt M102 umfasst das Verfahren ein Bestimmen (z.B. Berechnen, Messen und/oder Empfangen) einer Ist-Motorleistungsindikation des Motors (indikativ für eine Ist-Motorleistung) (z.B. Ist-Motorleistung und/oder Ist-Generatorausgangsstrom-, Spannung- und/oder Leistung) basierend auf einer (z.B. elektrischen) Generatorausgabe des Generators (z.B. Generatorausgangsleistung, z.B. basierend auf einer (z.B. gemessenen) Ausgangsspannung, einem (z.B. gemessenen) Ausgangsstrom, und/oder einem (z.B. vorbekannten, z.B. drehzahlabhängigen) Generatorwirkungsgrad), und In einem Schritt M103 umfasst das Verfahren ein Bestimmen eines (z.B. aktuellen) Motorbetriebszustands (z.B. Kraftstoffverbrennungsrate, Wirkungsgrad, Betriebszustandsanomalie) des Motors basierend auf einem Vergleich zwischen der Ist-Motorleistungsindikation und der Soll-Motorleistungsindikation.

Fig. 8 zeigt ein Ausführungsbeispiel einer Vorrichtung, insbesondere Steuerungseinrichtung 400, gemäß dem zweiten Aspekt. Die Vorrichtung 400 kann einen Programmspeicher A110, einen Hauptspeicher A120 und einen Datenspeicher A140 umfassen. Die Vorrichtung 400 kann ferner eine Benutzerschnittstelle A160 umfassen, die es beispielsweise einem Benutzer der Vorrichtung ermöglichen kann, mit ihr zu interagieren. Die Vorrichtung kann ferner eine Kommunikationsschnittstelle A150 umfassen, die beispielsweise so konfiguriert sein kann, dass sie mit mindestens einer anderen Vorrichtung, beispielsweise einem Motorsteuergerät und/oder einem Sensor und/oder einem Server und/oder einer Komponente der Transportkältemaschine (z.B. Lüfter und/oder Ventil und/oder Kompressormotor) interagiert, insbesondere Informationen zu empfangen und/oder zumindest eines der vorgenannten Elemente zu steuern. Die funktionalen Einheiten Soll-Motorleistungsindikationsbestimmer A131, Ist-Motorleistungsindikationsbestimmer A132, Motorbetriebszustandsbestimmer A133 können von dem Prozessor umfasst sein und/oder als Programmcode in einem der Speicher A110, A120, A140 vorgehalten werden. Die funktionalen Einheiten können insbesondere Funktionsblöcke eines Programmcodes und/oder Schaltkreise umfassen, beispielsweise Softwaremodule, Teilen eines oder mehrerer Computerprogramme, Computerbefehle, funktionale elektronische Schaltungen und/oder Kombinationen hieraus.

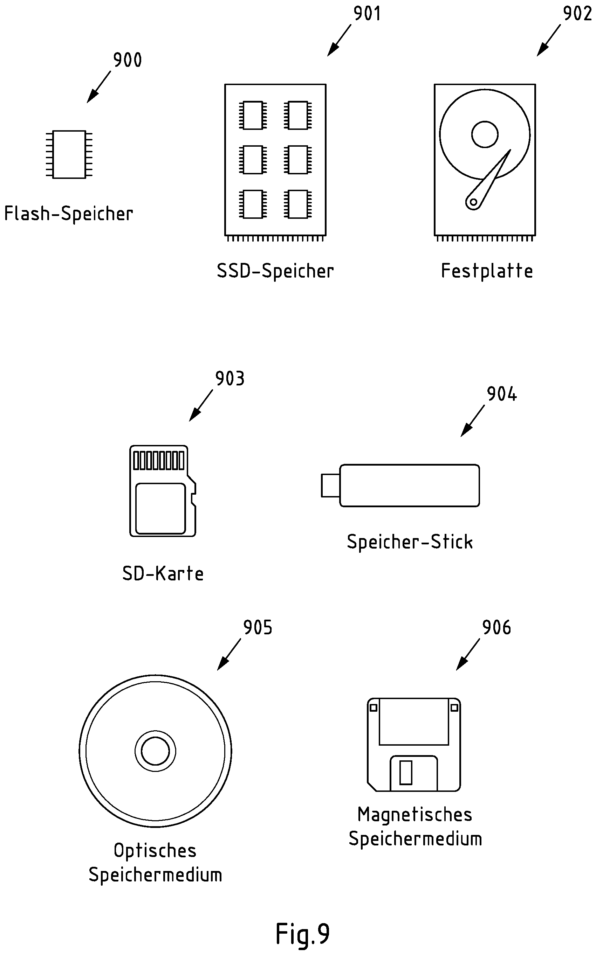

Fig. 9 ist eine schematische Darstellung von Beispielen von materiellen und nichtvergänglichen computerlesbaren Speichermedien gemäß der vorliegenden Erfindung, die beispielsweise zur Implementierung von Programm- und/oder Hauptspeicher A110, A120, A140 der Vorrichtung 400 der Fig. 8 verwendet werden können. Fig. 9 zeigt einen Flash-Speicher 900, der z.B. auf eine Leiterplatte gelötet oder gebondet sein kann, ein Solid-State-Laufwerk 901 mit einer Vielzahl von Speicherchips (z.B. Flash-Speicherchips), eine magnetische Festplatte 902, eine Secure Digital (SD)-Karte 903, einen Universal Serial Bus (USB)-Speicherstick 904, ein optisches Speichermedium 905 (wie z.B. eine CD-ROM oder DVD) und ein magnetisches Speichermedium 906.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

**Patentansprüche**

1. Ein Verfahren zur Überwachung eines Motors (100), umfassend

   - Bestimmen einer Soll-Motorleistungsindikation des Motors (100), wobei die Soll-Motorleistungsindikation auf einer Kraftstoffzufuhrmenge (K) basiert, wobei der Motor (100) einen Generator (110) antreibt,
   - Bestimmen einer Ist-Motorleistungsindikation des Motors (100) basierend auf einer Generatorausgabe des Generators (110), und
   - Bestimmen eines Motorbetriebszustands des Motors (110) basierend auf einem Vergleich zwischen der Ist-Motorleistungsindikation und der Soll-Motorleistungsindikation.

2. Das Verfahren nach Anspruch 1, wobei die Soll-Motorleistungsindikation zumindest eines der Folgenden angibt

   - ein Soll-Motordrehmoment des Motors (100) und/oder eine Soll-Motorleistung des Motors (100) und/oder
   - eine Soll-Generatorausgangsleistung des Generators (110), einen Soll-Generatorausgangsstrom des Generators (110), und/oder eine Soll-Generatorausgangsspannung des Generators (110).

**3.** Das Verfahren nach Anspruch 1 oder 2, wobei das Bestimmen der Soll-Motorleistungsindikation zumindest eines der Folgenden umfasst

- Empfangen der Soll-Motorleistungsindikation, insbesondere von einem Motorsteuergerät des Motors (100),
- Bestimmen der Kraftstoffzufuhr (K) und Bestimmen der Soll-Motorleistungsindikation basierend auf der bestimmten Kraftstoffzufuhr (K), insbesondere wobei das Bestimmen der Soll-Motorleistungsindikation auf einem Modell des Motors (100) basiert und/oder auf einem oder mehreren Parametern basiert, insbesondere auf einer Temperatur, einer Luftzufuhr, einem Luftdruck und/oder einer Kombination hieraus.

**4.** Das Verfahren nach einem der Ansprüche 1 bis 3, wobei die Ist-Motorleistungsindikation zumindest eines der Folgenden angibt

- ein Ist-Motordrehmoment des Motors (100) und/oder eine Ist-Motorleistung des Motors (100) und/oder
- eine Ist-Generatorausgangsleistung des Generators (110), einen Ist-Generatorausgangsstrom des Generators (110), und/oder eine Ist-Generatorausgangsspannung des Generators (110).

**5.** Das Verfahren nach einem der Ansprüche 1 bis 4, wobei der Motorbetriebszustand zumindest eines der Folgenden umfasst

- eine Ist-Kraftstoffverbrennungsrate des Motors (100), insbesondere eine Ist-Kraftstoffverbrennungsrate unterhalb einer vorbestimmten Soll-Kraftstoffverbrennungsrate, oder
- einer Unterleistung des Motors (100).

**6.** Das Verfahren nach einem der Ansprüche 1 bis 5, wobei der Vergleich umfasst

- Bestimmen einer Ist-Vergleichsgröße basierend auf der Ist-Motorleistungsindikation,
- Bestimmen einer Soll-Vergleichsgröße basierend auf der Soll-Motorleistungsindikation und
- Vergleichen der Ist-Vergleichsgröße mit der Soll-Vergleichsgröße.

**7.** Das Verfahren nach einem der Ansprüche 1 bis 6, wobei die Soll-Motorleistungsindikation und/oder die Ist-Motorleistungsindikation jeweils Momentanwerte angeben und/oder Mittelwerte angeben, wobei ein jeweiliger Mittelwert über eine Zeitspanne vorbestimmter Länge gemittelt ist.

**8.** Das Verfahren nach einem der Ansprüche 1 bis 7, ferner umfassend Auslösen zumindest einer Maßnahme basierend auf dem bestimmten Motorbetriebszustand.

**9.** Das Verfahren nach Anspruch 8, insbesondere wobei die Maßnahme zumindest eines der Folgenden umfasst

- Reduktion einer Ist-Ausgangsleistung des Generators (110), insbesondere durch Reduktion einer Leistungsaufnahme zumindest eines durch den Generator (110) gespeisten Verbrauchers, insbesondere Notlauf eines von dem Generator (110) angetriebenen Kältekreislaufs (230),
- Ausgabe eines Signals, und/oder
- Anpassung der Kraftstoffzufuhr zum Motor (100).

**10.** Das Verfahren nach einem der Ansprüche 1 bis 9, wobei

- der Motor (100) und/oder Generator (110) Teil einer Transportkältemaschine (2) sind.

**11.** Eine Vorrichtung (400), umfassend Mittel zum Steuern und/oder Ausführen des Verfahrens nach einem der Ansprüche 1 bis 10.

**12.** Die Vorrichtung (200) gemäß Anspruch 11, wobei die Mittel zumindest eines der Folgenden umfassen

- zumindest einen Prozessor,
- zumindest einen Sensor,
- zumindest eine Kommunikationseinrichtung,
- zumindest eine Ausgabeeinrichtung, und/oder
- zumindest einen Aktor und/oder eine Steuerungseinrichtung für zumindest einen Aktor.

**13.** Ein System umfassend eine Vorrichtung gemäß Anspruch 12 und ein Motorsteuergerät für einen Motor (100), wobei

- die Vorrichtung von dem Motorsteuergerät zumindest die Soll-Motorleistungsindikation empfängt und/oder
- die Vorrichtung dem Motorsteuergerät zumindest die Anpassung der Kraftstoffzufuhr zum Motor (100) vorgibt.

**14.** Eine Transportkältemaschine (2) umfassend

- einen Generator (110), einen Motor (100) und die Vorrichtung gemäß Anspruch 12 oder
- ein System gemäß Anspruch 13.

Fig.1

EP 4 786 773 A1

Fig.2

Fig.3

$P_M = P_G / \eta_G$

$P_M^*(K)$

$P_G$

$P_G^2$

$P_G = P_M \cdot \eta$

$P_G^4$

$P_G^1$

$P_G^3$

$P_M$

Fig.4a

$P$

$P_G^2$

$P_M$

$P_G^3$

$\Delta t$

$P_G^1$

$t$

Fig.4b

Fig.5a

Fig.5b

P

$P_G$

$P_M^*$

t

Fig.5c

$P_M^* - P_G/n_G$

$\Delta P_{t\eta}$

t

Fig.6

Fig.7

Fig.8

**Fig.9**

Europäisches
Patentamt

European
Patent Office

Office européen
des brevets

**EUROPÄISCHER RECHERCHENBERICHT**

Nummer der Anmeldung

EP 25 15 4972

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2018/108414 A1 (BOSCH GMBH ROBERT [DE]) 21. Juni 2018 (2018-06-21) <br> * Zusammenfassung * <br> * Ansprüche 1-8 * <br> * Abbildung 1 * <br> * Seite 1, letzter Absatz * <br> ----- | 1-14 | INV. <br> F02D41/14 <br> F02D29/06 |
| X | DE 10 2012 216614 A1 (BOSCH GMBH ROBERT [DE]) 20. März 2014 (2014-03-20) <br> * Zusammenfassung * <br> * Anspruch 1 * <br> * Absatz [0048] * <br> * Absatz [0009] * <br> ----- | 1-14 | |
| A | WO 94/09327 A1 (ICEMASTER GMBH [DE]; MERTENS JUERGEN [DE]) 28. April 1994 (1994-04-28) <br> * Zusammenfassung * <br> * Ansprüche * <br> ----- | 10,14 | |

RECHERCHIERTE
SACHGEBIETE (IPC)

F02D

Der vorliegende Recherchenbericht wurde für alle Patentansprüche erstellt

| Recherchenort | Abschlußdatum der Recherche | Prüfer |
|---|---|---|
| Den Haag | 11. Juli 2025 | Kämper, Fabian |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 25 15 4972

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-07-2025

| Im Recherchenbericht angeführtes Patentdokument | Datum der Veröffentlichung | Mitglied(er) der Patentfamilie | Datum der Veröffentlichung |
|---|---|---|---|
| WO 2018108414 A1 | 21-06-2018 | CN 110050119 A | 23-07-2019 |
| | | DE 102016225100 A1 | 21-06-2018 |
| | | FR 3060744 A1 | 22-06-2018 |
| | | KR 20190095350 A | 14-08-2019 |
| | | WO 2018108414 A1 | 21-06-2018 |
| DE 102012216614 A1 | 20-03-2014 | KEINE | |
| WO 9409327 A1 | 28-04-1994 | EP 0663057 A1 | 19-07-1995 |
| | | US 5629568 A | 13-05-1997 |
| | | WO 9409327 A1 | 28-04-1994 |

Für nähere Einzelheiten zu diesem Anhang : siehe Amtsblatt des Europäischen Patentamts, Nr.12/82

EPO FORM P0461